# EUROPEAN PATENT APPLICATION

(11) **EP 4 510 288 A1**
(43) Date of publication of application: **19.02.2025**
(21) Application number: 23788244.4
(22) Date of filing: 05.04.2023
(51) Int. Cl.: H01M 10/0587, H01M 4/13, H01M 4/64, H01M 4/66

(54) **NON-AQUEOUS ELECTROLYTE SECONDARY BATTERY**

(30) Priority: 14.04.2022 JP 2022066869
(71) Applicant: Panasonic Intellectual Property Management Co., Ltd., Kadoma-shi, Osaka 571-0057 (JP)
(72) Inventor: TAKAHASHI Takahiro, Kadoma-shi, Osaka 571-0057 (JP)
(74) Representative: Novagraaf International SA
(86) International application number: PCT/JP2023/014109
(87) International publication number: WO 2023/199825

(57) **Abstract**

A nonaqueous electrolyte secondary battery including: an electrode group including a first electrode having a first current collector, a second electrode having a second current collector, and a separator interposed between the first electrode and the second electrode; a nonaqueous electrolyte; and a battery case housing the electrode group and the nonaqueous electrolyte. The first electrode and the second electrode are wound with the separator interposed therebetween, with an outermost layer of the first electrode disposed further outside than an outermost layer of the second electrode. The winding-finish end of the first electrode is an end of an excess portion which is wound around an outer surface of the first electrode on an inner layer side, without the second electrode interposed therebetween. The circumferential length L1 of the excess portion is 90% or more of the circumferential length L of the first electrode of the outermost layer. The excess portion has a functional layer disposed on a surface of the first current collector.

## Description

### [Technical Field]

The present disclosure relates to a nonaqueous electrolyte secondary battery.

### [Background Art]

Patent Literature 1 proposes a nonaqueous electrolyte secondary battery including: a wound electrode body formed by spirally winding belt-like electrodes each including a belt-like current collector and mixture layers formed on both sides of the current collector, with a separator interposed between the electrodes; and a battery can housing the wound electrode body, in which the electrodes are each provided with a current collector-exposed portion where the mixture layer is not formed on either side of the current collector in an end portion thereof on the outer layer side in the winding direction, in the range of one or more layers from the end portion.

Patent Literature 1 discloses that "in conventional nonaqueous electrolyte secondary batteries, in which the mixture layer is formed close to the end portion of the current collector on the outer layer side in the winding direction, there has been a problem such that, for example, in the event of abnormality, such as crushing of the battery can, when an end portion of the negative electrode on the outer layer side pierces through the separator, the tip of the end portion comes in contact with the mixture layer of the adjacent positive electrode, and as a result, the negative electrode and the positive electrode are electrically connected to each other, causing an internal short circuit (shorting)." Patent Literature 1 aims to "provide a nonaqueous electrolyte secondary battery in which a current collector-exposed portion where the mixture layer is not formed is disposed at an end portion of an electrode in the winding direction, over the range of one or more layers from the end portion, so that the electrodes of the same polarity can come in contact with each other even when the electrode pierces through the separator and contacts the adjacent electrode, thereby to prevent or effectively suppress the occurrence of an internal short circuit."

### [Citation List]

### [Patent Literature]

Patent Literature 1: Japanese Laid-Open Patent Publication No. 2003-297432

### [Summary of Invention]

### [Technical Problem]

Simply suppressing an internal short circuit caused by crushing of individual batteries, however, is insufficient in some cases to enhance the safety. For example, when a plurality of batteries are used in combination (e.g., in the case of a module including a plurality of batteries), it is important to prevent a fire spread among the batteries. The fire spread can occur, when an abnormality occurs in one or more of the plurality of batteries and those battery reach a high temperature. When the internal pressure of the battery that has reached a high temperature reaches a predetermined value, the gas in the battery is vented outside through a predetermined safety valve, and the safety is ensured. However, the batteries around the battery in which an abnormality has occurred are heated from outside, and a large amount of heat is transmitted to the battery cases, to reduce the strength of the battery cases. In that case, cracks can occur in side walls of the battery cases before the safety valve is activated. Since the high temperature gas can be vented outside through the cracks in unintended directions, there is a risk of ending up in a fire spread.

### [Solution to Problem]

One aspect of the present disclosure relates to a nonaqueous electrolyte secondary battery, including: an electrode group including a first electrode having a first current collector, a second electrode having a second current collector, and a separator interposed between the first electrode and the second electrode; a nonaqueous electrolyte; and a battery case housing the electrode group and the nonaqueous electrolyte, wherein the first electrode and the second electrode are wound with the separator interposed therebetween, with an outermost layer of the first electrode disposed further outside than an outermost layer of the second electrode, a winding-finish end of the first electrode is an end of an excess portion which is wound around an outer surface of the first electrode on an inner layer side, without the second electrode interposed therebetween, a circumferential length L1 of the excess portion is 90% or more of a circumferential length L of the first electrode of the outermost layer, and the excess portion has a functional layer disposed on a surface of the first current collector.

### [Advantageous Effects of Invention]

According to the present disclosure, the safety is improved when a plurality of batteries are used in combination.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A longitudinal cross-sectional view of a nonaqueous electrolyte secondary battery according to a first embodiment of the present disclosure.
[FIG. 2] A conceptual diagram of the cross-sectional structure of a nonaqueous electrolyte secondary battery according to the first embodiment of the present disclosure.
[FIG. 3] A conceptual diagram of the cross-sectional structure of a nonaqueous electrolyte secondary battery according to a second embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. For the components other than those characteristic of the present disclosure, any known components for secondary batteries may be adopted. In the present specification, when referring to "a range of a numerical value A to a numerical value B," the range includes the numerical value A and the numerical value B. When a plurality of materials are mentioned as examples, one kind of them may be selected and used singly, or two or more kinds of them may be used in combination.

A nonaqueous electrolyte secondary battery according to an embodiment of the present invention includes an electrode group, a nonaqueous electrolyte, and a battery case. The battery case houses the electrode group and the nonaqueous electrolyte. The nonaqueous electrolyte secondary battery is a secondary battery that includes a liquid, gel, or solid nonaqueous electrolyte, and encompasses lithium-ion secondary batteries, lithium secondary batteries (lithium-metal secondary batteries), and all-solid-state secondary batteries.

The electrode group includes a first electrode having a first current collector, a second electrode having a second current collector, and a separator interposed between the first electrode and the second electrode, in which the first electrode and the second electrode are wound with the separator interposed therebetween. That is, the electrode group is of a wound type, and is, for example, columnar in shape.

The shape of the battery case may be any shape that can efficiently house the wound-type electrode group, for example, may have a cylindrical tubular portion, and may be shaped like a track (a shape in which a rectangular cross section having short and long sides is modified to have outwardly convex arc-shaped short sides). The material constituting the battery case is not particularly limited, but when containing a highly thermally conductive metal, the effect of the present invention is remarkable. The battery case may be a metal case or a metal can (outer jacket can). The material of the battery case may be stainless steel (SUS), steel (SPCC, SPCE, etc.), and the like.

The first electrode may include at least a first current collector, and may include a first active material layer disposed on a surface of the first current collector. The first active material layer contains an electrode active material. Likewise, the second electrode may include at least a second current collector, and may include a second active material layer disposed on a surface of the second current collector. The second active material layer contains an electrode active material. Usually, at least one of the first electrode and the second electrode has an active material layer. The electrode active material exhibits capacity through the Faraday reaction. Each active material layer may be a mixture layer containing an electrode active material and components other than the active material (binder etc.).

One of the first electrode and the second electrode is a negative electrode, and the other is a positive electrode. The negative electrode may have a negative electrode current collector, and may have a negative electrode active material layer (or a negative electrode mixture layer) disposed on a surface of the negative electrode current collector. The positive electrode has a positive electrode current collector, and a positive electrode active material layer (or a positive electrode mixture layer) disposed on a surface of the positive electrode current collector.

When the first electrode is a negative electrode, the first current collector is a negative electrode current collector. When the first electrode is a positive electrode, the first current collector is a positive electrode current collector. Each current collector is in the form of a sheet, and for example, is a metal foil. Each current collector has, for example, a long or belt-like shape.

When the first electrode is a negative electrode, the first current collector desirably contains Cu. Copper is excellent in heat diffusion, and helps prevent the battery case from locally reaching a high temperature even when the battery is heated from outside. Therefore, the strength of the battery case is maintained, leading to less occurrence of cracking. The first current collector containing Cu may be copper foil, copper alloy foil, and the like. The thickness of the first current collector containing Cu may be, for example, 4 µm to 12 µm.

When the first electrode is a positive electrode, the first current collector desirably contains at least one selected from the group consisting of Al, Ti, and stainless steel. Such a first current collector may be aluminum foil, aluminum alloy foil, titanium foil, titanium alloy foil, stainless steel foil, and the like. In that case, the thickness of the first current collector may be, for example, 10 µm to 20 µm.

When the first electrode is a negative electrode, the first active material layer is a negative electrode active material layer. When the first electrode is a positive electrode, the first active material layer is a positive electrode active material layer. The negative electrode active material layer and the positive electrode active material layer are disposed on a predetermined surface of one or both sides of the current collector. Note that the negative electrode may not have a negative electrode active material layer. The positive electrode active material layer faces the negative electrode, with a separator interposed therebetween.

In the electrode group, the outermost layer of the first electrode is disposed further outside than the outermost layer of the second electrode. That is, the first electrode is an electrode that constitutes the outermost layer of the electrode group. Around the outer surface of the outermost layer of the first electrode, the separator on the winding-finish side may be wound. The outer surface of the outermost layer of the first electrode may be in contact with the battery case.

The winding-finish end of the first electrode is an end of an excess portion which is wound around the outer surface of the first electrode on the inner layer side (inner by one layer), without the second electrode interposed therebetween. That is, the first electrode is provided on its winding-finish side with an excess portion where neither the outer surface nor the inner surface faces the second electrode. On the outer surface of the first electrode around which the excess portion is wound, the first active material layer may be disposed, or a later-described function layer may be disposed.

The excess portion has a functional layer disposed on a surface of the first current collector. The functional layer preferably covers 50% or more of the inner peripheral-side surface of the first current collector constituting the excess portion, and more preferably covers 70% or more thereof, in view of heat diffusion and heat insulation. Likewise on the inner peripheral side, the functional layer preferably covers 50% or more of the outer peripheral-side surface of the first current collector constituting the excess portion, and more preferably covers 70% or more thereof, in view of heat diffusion and heat insulation. The functional layer may be any layer that has a function of suppressing cracking in the battery case when the battery is heated from outside. The functional layer may have functions, such as heat insulation, heat absorption, and flame retardation effects.

The excess portion has a function of suppressing cracking in the battery case when the battery is heated from outside. When the battery is abnormally heated from outside, the battery case becomes hot, and the strength of the battery case decreases. Without the excess portion, when the pressure inside the battery increases, cracking would occur in the side wall of the battery case before the safety valve is activated. The excess portion has a heat diffusion effect that suppresses local heating of the battery case, heat insulation, heat absorption, and flame retardation effects that protect the battery case, and others, and also serves as a physical barrier that prevents the occurrence of cracking.

As a result, when a plurality of batteries are used in combination (e.g., when a module in which a plurality of batteries are housed closely each other), the excess portion has a function of suppressing the fire spread among the batteries. In a battery having an excess portion, the occurrence of cracking in the battery case is suppressed, and the gas is likely to be vented through a safety valve provided in the battery.

In view of enhancing the function of suppressing cracking in the battery case by the excess portion, the melting point of the first current collector is desirably 600 °C or higher, more desirably a temperature (e.g., 1000 °C or higher) at which it will not melt due to high temperature gas generated in the event of an abnormality. In this case, the first current collector acts as a barrier to suppress cracking in the battery case, so that the ventilation of gas in unintended directions that may be caused due to the occurrence of cracking can be suppressed.

The functional layer may be disposed, for example, continuously on one or both sides of the first current collector. It is to be noted, however, that the functional layer being continuous does not necessarily agree with the functional layer being disposed on the entire surface of one or both sides of the first current collector constituting the excess portion. For example, a plurality of line-shaped continuous functional layers may be disposed in stripes along the length direction (longer direction) of the first current collector, on one or both sides of the first current collector. Also, at least one end of the first current collector along the length direction may be exposed, and in the portion other than that, the functional layer may be disposed continuously on the entire surface. In these cases, the functional layer is continuous and the first current collector is partially exposed. In view of enhancing the effect of the present invention, the functional layer may be disposed on the entire surface of one or both sides of the first current collector constituting the excess portion.

The functional layer may be disposed, for example, intermittently on one or both sides of the first current collector. For example, one or more exposed portions of the first current collector may be provided in the winding direction of the electrode group. The shape of the exposed portion of the first current collector may be, although not limited to, a line shape or a strip shape along the width direction (shorter direction) of the first current collector.

At least a part of the excess portion may be wound around the outer surface of the first electrode on the inner layer side, with neither the second electrode nor the separator interposed therebetween. In this case, a least a part of the excess portion directly contacts the outer surface of the first electrode on the inner layer side. For example, 50% or more or 80% or more (e.g., 90% or more) of the excess portion may be wound around the outer surface of the first electrode on the inner layer side, with neither the second electrode nor the separator interposed therebetween. That is, 50% or more or 80% or more (e.g., 90% or more) of the excess portion may be brought into direct contact with the outer surface of the first electrode on the inner layer side. When the first active material layer is not disposed on the outer surface of the first electrode around which the excess portion is wound, the excess portion will directly contact the exposed portion of the outer surface of the first current collector.

On the other hand, the excess portion may be wound, with the separator interposed therebetween, around the outer surface of the first electrode on the inner layer side. For example, 50% or more or 80% or more (e.g., 90% or more) of the excess portion may be wound around the outer surface of the first electrode on the inner layer side, with the separator interposed therebetween, while without the second electrode interposed therebetween. However, since the separator itself is at least partially flammable, it is preferable that the excess portion is wound around the outer surface of the first electrode on the inner layer side, without the separator interposed therebetween.

Although a decent effect can be obtained when the excess portion is short, a circumferential length L1 of the excess portion is desirably 90% or more or 100% or more of a circumferential length L of the first electrode of the outermost layer, more desirably 150% or more, even more desirably 200% or more. The longer the length L1 is, the greater the effect of improving the safety is. However, in view of maintaining the volume energy density of the battery high, the length L1 is desirably 500% or less of the L, more desirably 400% or less. Note that when the length L1 is 100% of the length L, that is, when L1 = L, one layer of the first electrode of the outermost layer exactly matches the length of the excess portion.

When the first electrode has a first active material layer disposed on a surface of the first current collector, a thickness Tf of the functional layer is desirably equal to or less than a thickness T1 of the first active material layer. For example, by setting the thicknesses of the first active material layer and the functional layer substantially to be the same (Tf = T1), it is possible to make the first active material layer and the functional layer almost flush with each other. In this case, the electrode group is hardly applied with non-uniform stress from its winding-finish side. The thickness Tf of the functional layer is desirably equal to or less than the thickness T1 of the first active material layer, but may be Tf > T1. Furthermore, in view of allowing the functional layer to function more effectively, the Tf is desirably equal to or more than 20% of the T1.

When the first active material layer functions as a functional layer, a part of the first active material layer may be used as the functional layer. In this case, too, the thickness Tf of the functional layer (part of the first active material layer) is desirably equal to or less than the thickness T1 of a remainder of the first active material layer, and Tf = T1 is advantageous in manufacturing the battery. The remainder of the first active material layer is the first active material layer constituting a portion other than the excess portion of the first electrode. The most part of the first active material layer that contributes to charge-discharge reactions is the remainder.

When the difference between the thickness Tf and the thickness T1 is 5% or less of T1, this may be regarded as Tf = T1.

The winding-start end of the electrode group may be constituted of only the negative electrode, or only the negative electrode and the separator. For example, one or more layers from the winding-start end of the electrode group may be constituted of only the negative electrode, or only the negative electrode and the separator. Hereinafter, the portion corresponding to "one layer from the winding-start end of the electrode group" is sometimes referred to as an "electrode group center portion." The electrode group center portion may be constituted of a negative electrode part having a negative electrode current collector and a negative electrode active material layer on one or both sides of the negative electrode current collector, may be constituted of a laminate of such a negative electrode part and a separator, may be constituted of only a negative electrode current collector, and may be constituted of a laminate of a negative electrode current collector and a separator. The negative electrode or the negative electrode current collector is unlikely to be a starting point of abnormal heat generation. By constituting the electrode group center portion of something other than the positive electrode, that is, the negative electrode (or negative electrode current collector) and a separator, a robust tubular portion can be provide at the electrode group center portion. A hollow is formed inside the tubular portion. Such a tubular portion can maintain its shape even at high temperatures. Therefore, in the event of an abnormality, the hollow in the electrode group center portion acts as a passage for the gas generated inside the battery, so that the gas is vented outside through the safety valve. As a result, the fire spread among the batteries can be more effectively suppressed.

The diameter of the hollow inside the tubular portion formed by the electrode group center portion is desirably as large as possible in view of enhancing the function as a passage for high temperature gas, and may be desirably, for example, 1 mm or more, and may be 2 mm or more or 3 mm or more. However, when the diameter of the hollow is too large, the volume energy density of the battery decreases. Therefore, the diameter of the hollow is desirably, for example, 8 mm or less, and more desirably 6 mm or less. The diameter of the hollow is measured in a state where a portion corresponding to one layer from the winding-start end of the electrode group, that is, the electrode group center portion, is pressed outward (toward the inner wall of the hollow in the electrode group). The diameter of an equivalent circle in a cross section perpendicular to the winding axis direction of the space formed at that time inside the hollow may be regarded as a diameter of the hollow.

The functional layer may be, for example, an applied film formed by applying a slurry containing a particulate matter onto a predetermined surface of the first current collector, followed by drying. The applied film may contain a resin component. The functional layer may contain, as the particulate matter, at least one of an organic particle and an inorganic particle.

The particulate matter is preferably a material capable of reducing the influence of heat when the battery is heated from outside. The particulate matter preferably exhibits, for example, a heat insulation effect, a heat absorption effect, a flame retardation effect, etc. when the battery is heated from outside.

The inorganic particle may include at least one selected from the group consisting of a metal oxide, a metal hydroxide, a metal nitride, a metal fluoride, a metal boride, and a metal carbide. They can exhibit at least one of a heat insulation effect, a heat absorption effect, a flame retardation effect, etc. For example, a hydroxide is preferred in that it exhibits a heat absorption effect.

The metal oxide may include at least one selected from the group consisting of aluminum oxide, titanium oxide, magnesium oxide, zirconium oxide, nickel oxide, silicon oxide, and manganese oxide.

The metal hydroxide may include at least one selected from the group consisting of boehmite, aluminum hydroxide, and magnesium hydroxide.

The metal nitride includes at least one selected from the group consisting of titanium nitride, boron nitride, aluminum nitride, magnesium nitride, and silicon nitride.

The metal fluoride includes at least one selected from the group consisting of aluminum fluoride, lithium fluoride, sodium fluoride, magnesium fluoride, calcium fluoride, and barium fluoride.

The metal boride may include titanium boride.

The metal carbide may include at least one selected from the group consisting of silicon carbide, boron carbide, titanium carbide, and tungsten carbide.

The organic particle desirably includes a flame retardant containing a halogen atom (hereinafter sometimes simply referred to as a "flame retardant"). The flame retardant containing a halogen atom exhibits a flame retardation effect by releasing the halogen atom at a temperature of, for example, 180 °C or higher or 250 °C or higher. The functional layer of the excess portion is positioned in the outermost layer of the electrode group. Therefore, in the event of an abnormality of heating of the battery from outside, the halogen atom is released quickly, and the damage to the battery case due to heat can be effectively suppressed. In addition, the flame retardant, which is not electrically conductive, also acts as a resistance layer that suppresses the short-circuit current. This can effectively suppress the heat generation.

The flame retardant desirably includes a ring structure to which a halogen atom is bonded because the content of the halogen atom can be easily increased. The ring structure may be an aromatic ring or may not be an aromatic ring. In this case, all the halogen atoms may be bonded to the ring structure, or only some of the halogen atoms may be bonded to the ring structure. The halogen atom may be any of bromine (Br), fluorine (F), and chlorine (Cl), but bromine, fluorine, etc. are preferred in terms of their high flame retardation effect, and bromine is more preferred. It is desirable that the flame retardant does not contain a hydroxyl group, an oxoacid group, an amino group, etc.

The flame retardant may be at least one selected from the group consisting of ethylene-1,2-bispentabromophenyl, ethylenebistetrabromophthalimide, tetrabisbromobisphenol A, hexabromocyclododecane, 2,4,6-tribromophenol, 1,6,7,8,9,14,15,16,17,17, 18, 18-dodecachloropentacyclo(12.2. 1. 16,9.02, 13.05, 10)octadeca-7,15-diene, and tris(2,2,2-trifluoroethyl)phosphate.

The content of the halogen atom in the flame retardant may be 45 mass% or more. The content may be 60 mass% or more (e.g., 70 mass% or more). The upper limit may be any value, and may be 95 mass% or less (e.g., 90 mass% or more). For example, ethylene-1,2-bispentabromophenyl has a molecular weight of 971.2 and contains 10 bromine atoms (atomic weight: 79.9), from which the content of the halogen atom is calculated as 100×10×79.9 / 971.2 = 82.3 mass%.

The inorganic particle may include a lithium-containing phosphate. The lithium-containing phosphate may be at least one selected from the group consisting of lithium phosphate (Li₃PO₄), dilithium hydrogen phosphate (Li₂HPO₄), and lithium dihydrogen phosphate (LiH₂PO₄). Among them, lithium phosphate is preferred because it is effective in suppressing the heat generation in the battery in the event of an abnormality.

The functional layer may contain a binder, in addition to the particulate matter. The inclusion of a binder in the functional layer can enhance the bonding of the particles of the particulate matter to each other and the bonding of the functional layer to the current collector. Examples of the binder include, but not limited to, a fluorocarbon resin such as polyvinylidene fluoride (PVdF), a rubber such as styrene butadiene rubber, and a (meth)acrylic resin (e.g., (meth)acrylic acid).

The average particle diameter of the particulate matter may be, for example, 0.01 µm to 5 µm, and may be 0.05 µm to 3 µm. The average particle diameter of the particulate matter is determined as follows. First, 20 particles are randomly selected from an SEM image of the functional layer. Next, the grain boundaries of the selected 20 particles are observed, to identify the outlines of the particles, and then, the long diameter of each of the 20 particles is determined, to determine an average value of them as the average particle diameter.

In the functional layer, the content of the particulate matter may be 50 mass% or more, 60 mass% or more, 70 mass% or more, 80 mass% or more, or 90 mass% or more. The content of the particulate matter may be 100 mass% or less, 99 mass% or less, or 98 mass% or less. These lower and upper limits can be combined in any combination unless there is any contradiction.

In the following, an embodiment of the nonaqueous electrolyte secondary battery according to the present disclosure will be further described with reference to the drawings. In each drawing, the shape or characteristics of each component do not necessarily reflect the actual dimensions, and are not necessarily drawn at the same scale. The same components are designated by the same reference numerals throughout the drawings.

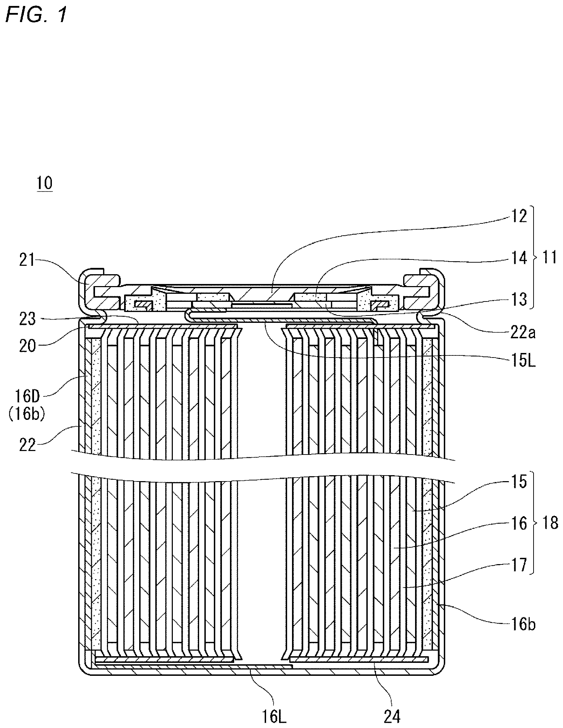

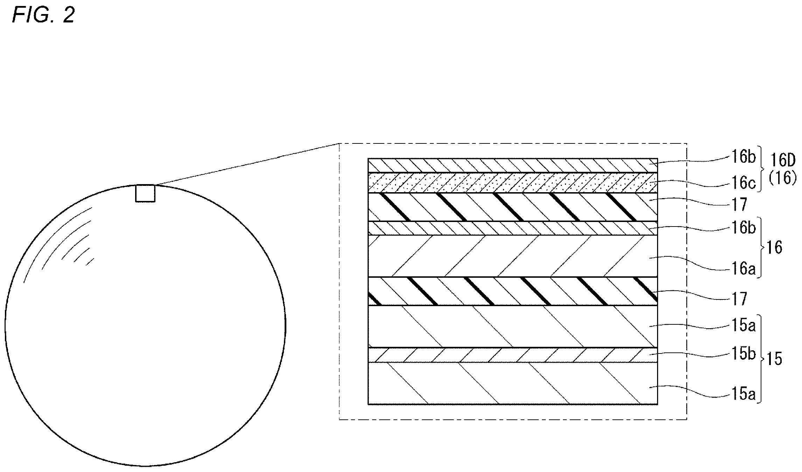

FIG. 1 is a longitudinal cross-sectional view of a cylindrical nonaqueous electrolyte secondary battery 10 (hereinafter, sometimes simply referred to as a "battery 10") according to a first embodiment of the present disclosure. FIG. 2 is a conceptual diagram of the cross-sectional structure of the battery 10. The present disclosure, however, is not limited to the following configuration.

In FIG. 1, the battery 10 includes an electrode group 18, a nonaqueous electrolyte (not shown), and a bottomed cylindrical battery case (metal can) 22 housing them. A sealing body 11 is fixed by crimping onto the opening of the battery case 22, with a gasket 21 interposed therebetween. This seals the inside of the battery 10. The sealing body 11 includes a safety valve of an internal pressure activation type, which shuts off the current in the event of excessive rise in the battery internal pressure, and breaks open if necessary. That is, the sealing body includes a valve body 12 having a thin-walled portion, a metal plate 13, and an annular insulating member 14 interposed between the valve body 12 and the metal plate 13. The valve body 12 and the metal plate 13 are connected to each other at their respective centers. A positive electrode lead 15L led out from a positive electrode 15 is connected to the metal plate 13. Thus, the valve body 12 functions as an external terminal of the positive electrode 15, and also functions as the safety valve. When the battery internal pressure rises, the connection between the valve body 12 and the metal plate 13 is broken, to shut off the current, and as a next step, when the thin-walled portion is broken, the gas is released outside, to ensure the safety. A negative electrode lead 16L led out from a negative electrode 16 is connected to the bottom inner surface of the battery case 22. An annular groove 22a is formed in the vicinity of the open end of the battery case 22. A first insulating plate 23 is disposed between one end face of the electrode group 18 and the annular groove 22a. A second insulating plate 24 is disposed between the other end face of the electrode group 18 and the bottom of the battery case 22. The electrode group 18 is formed by winding the positive electrode 15 and the negative electrode 16 with a separator 17 interposed therebetween, into a columnar shape. The outermost layer of the electrode group 18 is constituted of the negative electrode 16 on the winding-finish side. In other words, in the electrode group 18, the outermost layer of the negative electrode 16 is disposed further outside than the outermost layer of the positive electrode 15.

FIG. 2 is a cross-sectional view of a part (outermost layer part (S)) of the electrode group 18 nearest to the side wall of the metal case. In the outermost layer of the electrode group 18, the negative electrode current collector 16b on the winding-finish side is disposed. The winding-finish end of the negative electrode 16 can also be the end of an excess portion 16D which is wound around the outer surface of the negative electrode 16 on the inner layer side, without the positive electrode 15 interposed therebetween. Although not shown, the separator 17 on the winding-finish side may be further wound around the outer surface of the outermost layer of the negative electrode 16. The outer surface of the outermost layer of the negative electrode 16 may be in contact with the inner side wall of the battery case 22.

Although the description has been given here of the case where the outermost layer of the electrode group 18 is the negative electrode 16, the outermost layer of the electrode group may be the positive electrode. In this case, the positive electrode and the negative electrode in the description corresponding to FIG. 2 may be replaced with each other. That is, when the positive electrode and the negative electrode are replaced with each other, in the outermost layer of the electrode group 18, the positive electrode current collector on the winding-finish side is disposed. The winding-finish end of the positive electrode is also the end of an excess portion which is wound around the outer surface of the positive electrode on the inner layer side, without the negative electrode interposed therebetween. Although not shown, the separator 17 on the winding-finish side is further wound around the outer surface of the outermost layer of the positive electrode, preventing contact between the outer surface of the outermost layer which is the positive electrode, and the inner side wall of the battery case 22 connected to the negative electrode.

Returning back to FIG. 2, the excess portion 16D has a functional layer 16c provided on the inner side of the negative electrode current collector 16b. The functional layer 16c contains a particulate matter having functions, such as heat insulation, heat absorption, and flame retardation effects. In the example of FIG. 2, the functional layer 16c is provided continuously from the end of a negative electrode active material layer 16a, only on the inner side of the negative electrode current collector 16b. The functional layer 16c, however, may also be provided on the outer side of the negative electrode current collector 16b. The functional layer 16c may be provided intermittently on either side.

In the negative electrode 16 on the one-layer inner side adjacent to the excess portion 16D, the negative electrode active material layer 16a is disposed on its inner surface, and on its outer surface, the negative electrode current collector 16b is exposed. Even when the battery is heated from outside, the heat diffusion of the negative electrode current collector 16b helps prevent the battery case from locally reaching a high temperature. In the negative electrode current collector 16b on the further inner layer side (inner by two or more layers from the excess portion 16D), the negative electrode active material layers 16a are disposed on its both surfaces. Note that, in the negative electrode 16 on the one-layer inner side from the outermost layer (excess portion 16D), the negative electrode active material layer 16a may be disposed on its outer surface. In the outermost layer of the positive electrode 15, a positive electrode active material layer 15a is disposed on the inner and outer surfaces of a positive electrode current collector 15b.

According to the laminated structure as illustrated in FIG. 2, when the battery 10 is heated from outside, the excess portion 16D serves as a physical barrier, and the functional layer 16c exhibits a heat insulation effect, a heat absorption effect, a flame retardation effect, etc., to suppress the temperature rise in the outermost layer part (S) of the electrode group 18. As a result, cracking in the battery case 22 due to a decrease in strength of the battery case 22 becomes less likely to occur. In other words, even when a plurality of batteries are used in combination, the fire spread among the batteries becomes less likely to occur. Without the functional layer 16d, the outermost layer part (S) will be a part which is most likely to be a starting point of abnormal heat generation when the battery is heated from outside. Accordingly, suppressing the temperature rise in the outermost layer part (S) and protecting the battery case 22 are important measures to prevent the fire spread.

In FIG. 2, the excess portion 16D is wound around the outer surface of the negative electrode 16 (negative electrode current collector 16b) on the inner layer side, with the separator 17 interposed therebetween.

Especially when the separator 17 has a heat-resistant layer, the effect of heat insulation is increased. That is, the separator 17 can include a base material and a heat-resistant layer. The heat-resistant layer is an insulating layer formed on at least one principal surface selected from two principal surfaces of the base material. The heat-resistant layer can suppress the base material from shrinking in the event of excessive rise in the temperature of the electrode group 18. Since the inclusion of a heat-resistant layer in the separator 17 can suppress the shrinkage of the base material, an internal short circuit becomes less likely to occur, and the temperature rise in the outermost layer part (S) can be more effectively suppressed.

The base material may be, for example, a porous film containing a polyolefin resin. Polyolefin resins are desirable in that they are excellent in durability and have a function of closing the pores when the temperature rises to a certain level (i.e., a shutdown function). The base material may be of a single-layer structure, a two-layer structure, or a three- or more-layer structure.

The heat-resistant layer may contain inorganic particles (or inorganic filler) and a polymer (or polymer or resin). The polymer binds the inorganic particles to the base material. The polymer is desirably a heat-resistant resin that has higher heat resistance than the major component of the base material. The heat-resistant layer may contain inorganic particles as a major component (e.g., 80 mass% or more) or may contain a heat-resistant resin as a major component (e.g., 40 mass% or more). The heat-resistant layer may contain a heat-resistant resin, without containing inorganic particles.

The heat-resistant resin may be a polyamide resin, a polyimide resin, a polyamide-imide resin, and the like. In particular, it is preferable to include at least one selected from the group consisting of an aromatic polyamide, an aromatic polyimide, and an aromatic polyamide-imide. These are known as polymers having particularly high heat resistance. In view of heat resistance, preferred are aramids, i.e., meta-aramids (meta-type wholly-aromatic polyamides) and para-aramids (para-type wholly-aromatic polyamides).

As the inorganic particles, the already-mentioned particulate matter that can be used for the functional layer 16d may be used. In particular, in terms of electrical insulation and heat resistance, at least one selected from the group consisting of aluminum oxide, boehmite, talc, titanium oxide, and magnesium oxide is preferred.

The thickness of the heat-resistant layer may be 3% to 50% of the thickness of the separator 17. When the heat-resistant layer is formed on each of the two principal surfaces of the base material, the total thickness of the heat-resistant layers may be 3% to 50% of the thickness of the separator.

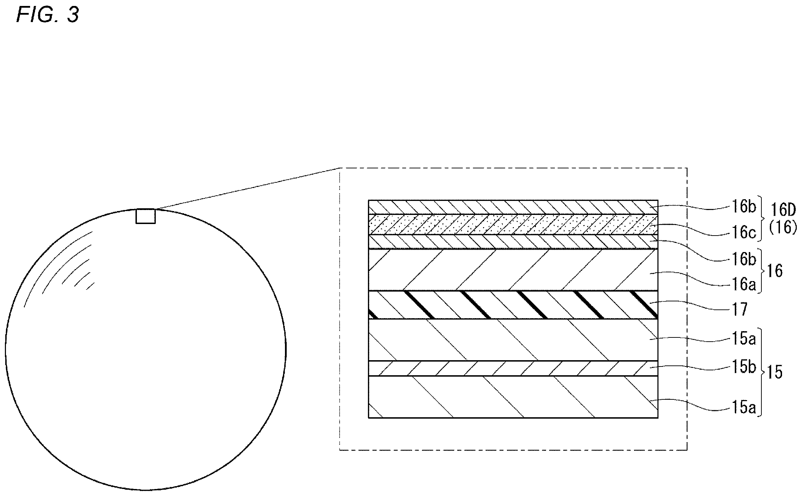

FIG. 3 is a conceptual diagram showing a cross-sectional structure of a battery 10A according to a second embodiment of the present disclosure. In the battery 10A, the excess portion 16D is directly wound around the outer surface of the negative electrode 16 (negative electrode current collector 16b) on the inner layer side, with neither the positive electrode 15 nor the separator 17 interposed therebetween. In this case, the heat insulation effect, the heat absorption effect, and the flame retardation effect, etc. of the functional layer 16c act, without via the separator 17, immediately on the negative electrode 16 on the inner layer side. For example, when the heat absorption effect of the functional layer 16c exhibits in the outermost layer part (S), it is desirable that the functional layer 16c is directly wound around the outer surface of the negative electrode 16 (negative electrode current collector 16b) on the inner layer side, without the separator 17 interposed therebetween.

Although the description has been given here also of the case where the outermost layer of the electrode group 18 is the negative electrode 16, the outermost layer of the electrode group may be the positive electrode. In this case, the positive electrode and the negative electrode in the description corresponding to FIG. 3 may be replaced with each other. That is, when the positive electrode and the negative electrode are replaced with each other, in the battery 10A, the excess portion is directly wound around the outer surface of the positive electrode (positive electrode current collector) on the inner layer side, with neither the negative electrode nor the separator interposed therebetween. In this case, the functions of the functional layer, such as heat insulation, heat absorption, and flame retardation effects, can act immediately on the positive electrode on the inner layer side, without via the separator. When the heat absorption effect of the functional layer exhibits in the outermost layer part (S), the functional layer may be directly wound around the outer surface of the positive electrode (positive electrode current collector) on the inner layer side, without the separator interposed therebetween.

In the example of FIGS. 2 and 3, the thickness Tf of the functional layer 16c is drawn smaller than the thickness T1 of the negative electrode active material layer 16a, as Tf < T1, but the thicknesses may be Tf = T1 or Tf > T1. For example, when the functional layer 16d is the negative electrode active material layer 16a, Tf = T1 is advantageous in manufacturing the battery. The negative electrode active material layer 16a, which has a porous structure, has a heat insulation effect. In particular, a negative electrode active material layer containing a porous carbonaceous material as the negative electrode active material is excellent in heat insulation effect.

A detailed description will be given below of each component of a lithium-ion secondary battery as an example of a nonaqueous electrolyte secondary battery.

### <Negative electrode>

The negative electrode includes, for example, a negative electrode current collector, and a negative electrode active material layer (negative electrode mixture layer) formed on a surface of the negative electrode current collector and containing a negative electrode active material. The negative electrode mixture layer can be formed by applying a negative electrode slurry of a negative electrode mixture dispersed in a dispersion medium onto a surface of the negative electrode current collector, followed by drying. The dry applied film may be rolled as necessary. The negative electrode mixture layer may be formed on one side or both sides of the negative electrode current collector.

The negative electrode mixture contains a negative electrode active material as an essential component, and may contain a binder, a conductive agent, a thickener, and the like as optional components. The negative electrode active material includes a material that electrochemically absorbs and releases lithium ions. As the material that electrochemically absorbs and releases lithium ions, a carbon material, a Si-containing material, and the like can be used. Examples of the Si-containing material include a silicon oxide (SiOₓ where 0.5 ≤ x ≤ 1.5), and a composite material containing a silicate phase and silicon particles dispersed in the silicate phase.

Examples of the carbon material include graphite, graphitizable carbon (soft carbon), and non-graphitizable carbon (hard carbon). In particular, graphite is preferred in terms of its excellent stability during charging and discharging and small irreversible capacity. Graphite means a material having a graphite-like crystal structure, examples of which include natural graphite, artificial graphite, and graphitized mesophase carbon particles. The carbon material may be used singly or in combination of two or more kinds.

When, among the negative electrode active materials, a composite material containing a silicate phase and silicon particles dispersed in the silicate phase is used, high capacity is easily achieved because the content of the silicon particles can be selected as desired. Here, the silicate phase means a composite oxide phase containing silicon, oxygen, an alkali metal, and the like. A composite material in which the silicate phase is a lithium silicate phase containing silicon, oxygen, and lithium is sometimes referred to as an "LSX." The higher the content of silicon particles in the LSX is, the larger the negative electrode capacity is. The LSX absorbs lithium ions through alloying of silicon with lithium. By increasing the content of the silicon particles, high capacity can be expected.

The crystallite size of the silicon particles dispersed in the lithium silicate phase is, for example, 5 nm or more. The silicon particles have a particulate phase of elementary silicon (Si). When the crystallite size of the silicon particles is set to 5 nm or more, the surface area of the silicon particles can be suppressed small, and therefore, the deterioration of the silicon particles accompanied by the generation of irreversible capacity is unlikely to occur. The crystallite size of the silicon particles is calculated using the Scherrer's equation from the half-value width of a diffraction peak attributed to the Si (111) plane of an X-ray diffraction (XRD) pattern of the silicon particle.

As the negative electrode active material, the LSX and a carbon material may be used in combination. The LSX expands and contracts in volume associated with charging and discharging, and therefore, increasing the proportion thereof in the negative electrode active material increases the likelihood of a contact failure between the negative electrode active material and the negative electrode current collector during charging and discharging. However, by using the LSX in combination with a carbon material, it becomes possible to achieve excellent cycle characteristics while imparting a high capacity of the silicon particles to the negative electrode. The proportion of the LSX in the sum of the LSX and the carbon material is preferably, for example, 3 to 30 mass%. This makes it easier to achieve both high capacity and improved cycle characteristics.

As the negative electrode current collector, a metal foil, a mesh, a net, a punched sheet, and the like can be used. Examples of the material of the negative electrode current collector includes stainless steel, nickel, nickel alloy, copper, and copper alloy.

As the binder for the negative electrode, for example, a resin material is used. Examples of the binder include a fluorocarbon resin, a polyolefin resin, a polyamide resin, a polyimide resin, an acrylic resin, a vinyl resin, and a rubbery material (e.g., styrene butadiene copolymer (SBR)). The binder may be used singly or in combination of two or more kinds.

The thickener may be, for example, a cellulose derivative, such as cellulose ether. Examples of the cellulose derivative include carboxymethyl cellulose (CMC) and modified products thereof, and methyl cellulose. The thickener may be used singly or in combination of two or more kinds.

Examples of the conductive material include carbon nanotubes (CNTs), carbon fibers other than CNTs, and conductive particles (e.g., carbon black, graphite).

The dispersion medium used in the negative electrode slurry is not particularly limited, and may be, for example, water, an alcohol, N-methyl-2-pyrrolidone (NMP), mixed solvents thereof, and the like.

As the negative electrode current collector, for example, a metal foil can be used. The negative electrode current collector may be porous. Examples of the material of the negative electrode current collector include stainless steel, nickel, nickel alloy, copper, and copper alloy. The thickness of the negative electrode current collector is, although not limited to, for example, 1 to 50 µm, and may be 5 to 30 µm.

### <Positive electrode>

The positive electrode includes, for example, a positive electrode current collector, and a positive electrode active material layer (positive electrode mixture layer) formed on a surface of the positive electrode current collector and containing a positive electrode active material. The positive electrode mixture layer can be formed by applying a positive electrode slurry of a positive electrode mixture dispersed in a dispersion medium onto a surface of the positive electrode current collector, followed by drying. The dry applied film may be rolled as necessary. The positive electrode mixture layer may be formed on one side or both sides of the positive electrode current collector. The positive electrode mixture contains a positive electrode active material as an essential component, and may contain a binder, a thickener, and the like as optional components.

The positive electrode active material may be any material that can be used as a positive electrode active material for nonaqueous electrolyte secondary batteries (esp. lithium-ion secondary batteries), and in view of achieving high capacity, includes a lithium-transition metal composite oxide containing at least nickel as a transition metal (composite oxide N). The proportion of the composite oxide N in the positive electrode active material is, for example, 70 mass% or more, may be 90 mass% or more, and may be 95 mass% or more.

The composite oxide N may be, for example, a lithium-transition metal composite oxide having a layered rock-salt type structure and containing Ni and at least one selected from the group consisting of Co, Mn, and Al. Hereinafter, a lithium-transition metal composite oxide having a layered rock-salt type structure and containing Ni and at least one selected from the group consisting of Co, Mn, and Al, in which the proportion of Ni in the metal elements other than Li is 80 atom% or more is sometimes referred to as a "composite oxide HN." The proportion of the composite oxide HN in the composite oxide N used as the positive electrode active material is, for example, 90 mass% or more, may be 95 mass% or more, and may be 100%. The higher the proportion of Ni is, the more the lithium ions can be extracted from the composite oxide HN during charging, leading to high capacity. Co, Mn, and Al contribute to stabilizing the crystal structure of the composite oxide HN, which has a high Ni content.

The composite oxide HN is represented by, for example, a formula: Li_{α}Ni_{(1-x1-x2-y-z)}Coₓ₁Mnₓ₂Al_{y}M_{z}O_{2+β}. The element M is an element other than Li, Ni, Co, Mn, Al, and oxygen. Mn contributes to stabilizing the crystal structure of the composite oxide HN, and Mn is inexpensive, the inclusion of which in the composite oxide HN is advantageous for cost reduction. Al contributes to stabilizing the crystal structure of the composite oxide HN.

In the above formula, α representing the atomic ratio of lithium satisfies, for example, 0.95 ≤ α ≤ 1.05. The value of α increases and decreases during charging and discharging. In (2+β) representing the atomic ratio of oxygen, β satisfies -0.05 ≤ β ≤ 0.05.

The value of 1-x1-x2-y-z (= v) representing the atomic ratio of Ni is, for example, 0.8 or more, may be 0.85 or more, and may be 0.90 or more, or 0.95 or more. The value of v may be 0.98 or less, and may be 0.95 or less. The value of x1 representing the atomic ratio of Co is, for example, 0.1 or less (0 ≤ x1 ≤ 0.1), x2 representing the atomic ratio of Mn is, for example, 0.1 or less (0 ≤ x2 ≤ 0.1), y representing the atomic ratio of Al is, for example, 0.1 or less (0 ≤ y ≤ 0.1), and z representing the atomic ratio of the element M is, for example, 0 ≤ z ≤ 0.10.

The element M may be at least one selected from the group consisting of Ti, Zr, Nb, Mo, W, Fe, Zn, B, Si, Mg, Ca, Sr, Sc, and Y. In particular, when at least one selected from the group consisting of Nb, Sr, and Ca is contained in the composite oxide HN, the surface structure of the composite oxide HN is stabilized, the resistance is reduced, and the elution of metal is further suppressed. It is more effective when the element M is localized near the particle surfaces of the composite oxide HN.

As the binder for the positive electrode, for example, a resin material is used. Examples of the binder include a fluorocarbon resin, a polyolefin resin, a polyamide resin, a polyimide resin, an acrylic resin, and a vinyl resin. The binder may be used singly or in combination of two or more kinds.

Examples of the conductive material include carbon nanotubes (CNTs), carbon fibers other than CNTs, and conductive particles (e.g., carbon black, graphite).

The dispersion medium used in the positive electrode slurry is not particularly limited, and may be, for example, water, an alcohol, N-methyl-2-pyrrolidone (NMP), a mixed solvent of these, and the like.

As the positive electrode current collector, for example, a metal foil can be used. The positive electrode current collector may be porous. The porous current collector includes, for example, a net, a punched sheet, and an expanded metal. Examples of the material of the positive electrode current collector include stainless steel, aluminum, aluminum alloy, and titanium. The thickness of the positive electrode current collector is, although not limited to, for example, 1 to 50 µm, and may be 5 to 30 µm.

### <Nonaqueous electrolyte>

The nonaqueous electrolyte contains, for example, a nonaqueous solvent and a solute dissolved in the nonaqueous solvent. The solute is an electrolyte salt that ionically dissociates in the nonaqueous electrolyte. The solute may include, for example, a lithium salt. The nonaqueous electrolyte can contain various additives.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl acetate, ethyl acetate, propyl acetate, methyl propionate (MP), and ethyl propionate (EP). The nonaqueous solvent may be used singly or in combination of two or more kinds.

As the lithium salt, for example, a lithium salt of a chlorine-containing acid (LiClO₄, LiAlCl₄, LiB₁₀Cl₁₀, etc.), a lithium salt of a fluorine-containing acid (LiPF₆, LiPF₂O₂, LiBF₄, LiSbF₆, LiAsF₆, LiCF₃SO₃, LiCF₃CO₂, etc.), a lithium salt of a fluorine-containing acid imide (LiN(FSO₂)₂, LiN(CF₃SO₂)₂, LiN(CF₃SO₂)(C₄F₉SO₂), LiN(C₂F₅SO₂)₂, etc.), a lithium halide (LiCl, LiBr, LiI, etc.), and the like can be used. The lithium salt may be used singly or in combination of two or more kinds.

The concentration of the lithium salt in the nonaqueous electrolyte may be 1 mol/liter or more and 2 mol/liter or less, and may be 1 mol/liter or more and 1.5 mol/liter or less. The lithium salt concentration, however, is not limited to the above.

### <Separator>

The separator is excellent in ion permeability and has moderate mechanical strength and electrically insulating properties. As the separator, a microporous thin film, a woven fabric, a nonwoven fabric, and the like can be used, and, for example, a separator having a heat-resistant layer may be used.

### (Supplementary note)

The above description of embodiments discloses the following techniques.

### (Technique 1)

A nonaqueous electrolyte secondary battery, comprising:
an electrode group including a first electrode having a first current collector, a second electrode having a second current collector, and a separator interposed between the first electrode and the second electrode; a nonaqueous electrolyte; and a battery case housing the electrode group and the nonaqueous electrolyte, wherein
the first electrode and the second electrode are wound with the separator interposed therebetween, with an outermost layer of the first electrode disposed further outside than an outermost layer of the second electrode,
a winding-finish end of the first electrode is an end of an excess portion which is wound around an outer surface of the first electrode on an inner layer side, without the second electrode interposed therebetween,
a circumferential length L1 of the excess portion is 90% or more of a circumferential length L of the first electrode of the outermost layer, and
the excess portion has a functional layer disposed on a surface of the first current collector.

### (Technique 2)

The nonaqueous electrolyte secondary battery according to technique 1, wherein at least a part of the excess portion is wound around the outer surface of the first electrode on the inner layer side, without neither the second electrode nor the separator interposed therebetween.

### (Technique 3)

The nonaqueous electrolyte secondary battery according to technique 1 or 2, wherein the excess portion is wound around the outer surface of the first electrode on the inner layer side, with the separator interposed therebetween.

### (Technique 4)

The nonaqueous electrolyte secondary battery according to any one of techniques 1 to 3, wherein
the first electrode includes a first active material layer disposed on a surface of the first current collector, and
a thickness of the functional layer is equal to or less than a thickness of the first active material layer.

### (Technique 5)

The nonaqueous electrolyte secondary battery according to technique 4, wherein the functional layer is a part of the first active material layer, and the thickness of the functional layer is equal to or less than a thickness of a remainder of the first active material layer.

### (Technique 6)

The nonaqueous electrolyte secondary battery according to any one of techniques 1 to 5, wherein the functional layer is disposed continuously on one or both sides of the first current collector.

### (Technique 7)

The nonaqueous electrolyte secondary battery according to any one of techniques 1 to 5, wherein the functional layer is disposed intermittently on one or both sides of the first current collector.

### (Technique 8)

The nonaqueous electrolyte secondary battery according to any one of techniques 1 to 7, wherein the functional layer contains at least one of an organic particle and an inorganic particle.

### (Technique 9)

The nonaqueous electrolyte secondary battery according to technique 8, wherein the inorganic particle includes at least one selected from the group consisting of a metal oxide, a metal hydroxide, a metal nitride, a metal fluoride, a metal boride, and a metal carbide.

### (Technique 10)

The nonaqueous electrolyte secondary battery according to technique 9, wherein
the metal oxide includes at least one selected from the group consisting of aluminum oxide, titanium oxide, magnesium oxide, zirconium oxide, nickel oxide, silicon oxide, and manganese oxide,
the metal hydroxide includes at least one selected from the group consisting of boehmite, aluminum hydroxide, and magnesium hydroxide,
the metal nitride includes at least one selected from the group consisting of titanium nitride, boron nitride, aluminum nitride, magnesium nitride, and silicon nitride,
the metal fluoride includes at least one selected from the group consisting of aluminum fluoride, lithium fluoride, sodium fluoride, magnesium fluoride, calcium fluoride, and barium fluoride,
the metal boride includes titanium boride, and
the metal carbide includes at least one selected from the group consisting of silicon carbide, boron carbide, titanium carbide, and tungsten carbide.

### (Technique 11)

The nonaqueous electrolyte secondary battery according to technique 8, wherein the organic particle includes a flame retardant containing a halogen atom.

### (Technique 12)

The nonaqueous electrolyte secondary battery according to technique 11, wherein the flame retardant includes at least one selected from the group consisting of ethylene-1,2-bispentabromophenyl, ethylenebistetrabromophthalimide, tetrabisbromobisphenol A, hexabromocyclododecane, 2,4,6-tribromophenol, 1,6,7,8,9,14,15,16,17,17,18,18-dodecachloropentacyclo(12.2.1.16,9.02,13.05,10)octadeca-7,15-diene, and tris(2,2,2-trifluoroethyl)phosphate.

### (Technique 13)

The nonaqueous electrolyte secondary battery according to any one of techniques 1 to 12, wherein
the first electrode is a negative electrode, and
the first current collector contains Cu.

### (Technique 14)

The nonaqueous electrolyte secondary battery according to any one of techniques 1 to 12, wherein
the first electrode is a positive electrode, and
the first current collector includes at least one selected from the group consisting of Al, Ti, and stainless steel.

### [Examples]

In the following, the present disclosure will be specifically described with reference to Examples and Comparative Examples. The present invention, however, is not limited to the following Examples.

### <<Examples 1 to 45>>

### (a) Production of positive electrode

A positive electrode slurry was prepared by mixing 100 parts by mass of a positive electrode active material (LiNi_{0.92}Co_{0.04}Al_{0.04}O₂), 1.0 part by mass of acetylene black serving as a conductive material, polyvinylidene fluoride (PVdF) serving as a binder, and N-methyl-2-pyrrolidone (NMP). The PVdF amount was 0.9 parts by mass per 100 parts by mass of the positive electrode active material. The positive electrode slurry was applied onto both sides of an aluminum foil (thickness 15 µm) serving as a positive electrode current collector, and the applied film was dried, and rolled with a roller, to form positive electrode active material layers. The thickness of each of the two positive electrode active material layers attached to both sides of the positive electrode current collector was 70 µm. The positive electrode was then cut into a belt-like shape. In Examples with the positive electrode constituting the outermost layer, on the positive electrode current collector on the inner layer side facing the excess portion, the positive electrode active material layer was disposed only on its inner circumferential side.

### (b) Production of negative electrode

A negative electrode slurry was prepared by mixing a negative electrode active material (a 92:8 (mass ratio) mixture of spherical artificial graphite having an average particle diameter of 20 µm and a silicon-based material SiOₓ where x = 1), styrene butadiene rubber (SBR) serving as a binder, and water. The SBR amount was 1.0 part by mass per 100 parts by mass of the negative electrode active material. The negative electrode slurry was applied onto both sides of a copper foil (thickness 8 µm) serving as a negative electrode current collector, and the applied film was dried, and rolled with a roller, to form negative electrode active material layers. The thickness of each of the two negative electrode active material layers attached to both sides of the negative electrode current collector was 70 µm. The negative electrode was then cut into a belt-like shape. In Examples with the negative electrode constituting the outermost layer, on the negative electrode current collector on the inner layer side facing the excess portion, the negative electrode active material layer was disposed only on its inner circumferential side.

### (c) Preparation of nonaqueous electrolyte

LiPF₆ was dissolved at a concentration of 1.4 mol/L in a mixed solvent containing ethylene carbonate (EC) and dimethyl carbonate (DMC) in a volume ratio of 1:3 and containing 5 mass% vinylene carbonate, to prepare a nonaqueous electrolyte.

### (d) Fabrication of electrode group

An exposed portion of the positive electrode current collector was disposed near the center in the longitudinal direction of the belt-like positive electrode, and a positive electrode lead 5a made of aluminum was attached to the exposed portion. An exposed portion of the negative electrode current collector was disposed at one end of the longitudinal direction of the belt-like negative electrode, and a negative electrode lead made of nickel was attached to the exposed portion. Then, the positive electrode and the negative electrode were wound with a separator (thickness 20 µm) interposed therebetween, to form a cylindrical electrode group. The separator used here was a polyethylene microporous film having a heat-resistant layer containing aramid.

### (e) Excess portion

A predetermined excess portion was formed in the first electrode (negative or positive electrode). The length L1 of the excess portion along the circumferential direction of the electrode group was set to 100% of the circumferential length L of the negative or positive electrode of the outermost layer (one layer of the outermost layer) or about 400% (four layers from the outermost layer). The functional layer was disposed only on the inner circumferential side or the outer circumferential side of the current collector (copper foil or aluminum foil), or on both sides.

### (f) Fabrication of battery

Next, a cylindrical lithium-ion secondary battery as illustrated in FIG. 1 was fabricated by the following procedure. An upper insulating plate and a lower insulating plate were placed on the upper and lower end faces of the electrode group, respectively, and the electrode group was housed in a battery case (side wall thickness 220 µm) made of steel (SPCE) having a bottomed cylindrical shape with an opening. At this time, the negative electrode lead was welded to the inside of the bottom of the battery case. Then, an annular groove was formed above the upper insulating plate and near the open end of the battery case. After the positive electrode lead was welded to the underside of a sealing plate having a safety valve of an internal pressure activation type, the nonaqueous electrolyte was injected into the battery case under reduced pressure, and then, the sealing plate was placed on the annular groove so as to close the opening of the battery case. The sealing plate has a gasket placed in advance around its peripheral rim, and with the gasket therebetween, the open end of the battery case was crimped onto the sealing plate, to complete a cylindrical 21700 size lithium-ion secondary battery.

The completed lithium-ion secondary battery was subjected to a preliminary charge-discharge consisting of charging to 4.2 V at a constant current equal to 0.3C and, then, discharging to 2.5 V at a constant current equal to 0.5C, to obtain a lithium-ion secondary battery corresponding to the initial state.

### <Functional layer>

In Examples 1 to 6, only on the inner circumferential side of the negative electrode current collector, a negative electrode active material layer having the same thickness as the negative electrode active material layer in the portion facing the positive electrode active material layer was provided as a functional layer.

In Examples 7 to 12, only on the outer circumferential side of the negative electrode current collector, a negative electrode active material layer having the same thickness as the negative electrode active material layer in the portion facing the positive electrode active material layer was provided as a functional layer.

In Examples 13 to 18, on both sides of the negative electrode current collector, a negative electrode active material layer having the same thickness as the negative electrode active material layer in the portion facing the positive electrode active material layer was provided as a functional layer.

In Example 19, only on the inner circumferential side of the negative electrode current collector, an applied film containing 100 parts by mass of aluminum oxide (average particle diameter 0.7 µm) and 2 parts by mass of a binder (PVdF (the same applies hereinafter)) was provided as a functional layer (thickness 70 µm).

In Example 20, only on the inner circumferential side of the negative electrode current collector, an applied film containing 100 parts by mass of titanium oxide (average particle diameter 0.5 µm) and 2 parts by mass of a binder was provided as a functional layer (thickness 70 µm).

In Example 21, only on the inner circumferential side of the negative electrode current collector, an applied film containing 100 parts by mass of ethylene-1,2-bispentabromophenyl (SAYTEX (registered trademark)-8010 available from Albemarle Japan Corporation) serving as a flame retardant and 2 parts by mass of a binder was provided as a functional layer (thickness 70 µm).

In Example 22, on the inner circumferential side of the negative electrode current collector, a negative electrode active material layer having the same thickness as the negative electrode active material layer in the portion facing the positive electrode active material layer, and on the outer circumferential side of the negative electrode current collector, the same applied film containing aluminum oxide as that of Example 19 were provided, each as a functional layer.

In Example 23, on the inner circumferential side of the negative electrode current collector, a negative electrode active material layer having the same thickness as the negative electrode active material layer in the portion facing the positive electrode active material layer, and on the outer circumferential side of the negative electrode current collector, the same applied film containing titanium oxide as that of Example 20 were provided, each as a functional layer.

In Example 24, on the inner circumferential side of the negative electrode current collector, a negative electrode active material layer having the same thickness as the negative electrode active material layer in the portion facing the positive electrode active material layer, and on the outer circumferential side of the negative electrode current collector, the same applied film containing a flame retardant as that of Example 21 were provided, each as a functional layer.

In Examples 25 to 29, only on the inner circumferential side of the positive electrode current collector, the same applied film containing aluminum oxide as that of Example 19 was provide as a functional layer. The separator was further wound around the outer surface of the outermost layer of the positive electrode, to ensure electrical insulation between the outer surface of the outermost layer which was the positive electrode, and the battery case. The same applies to the following Examples 30 to 45.

In Examples 30 to 35, only on the outer circumferential side of the positive electrode current collector, the same applied film containing aluminum oxide as that of Example 19 was provide as a functional layer.

In Examples 36 to 41, on both sides of the positive electrode current collector, the same applied film containing aluminum oxide as that of Example 19 was provided as a functional layer.

In Example 42, only on the inner circumferential side of the positive electrode current collector, the same applied film containing titanium oxide as that of Example 20 was provide as a functional layer.

In Example 43, only on the inner circumferential side of the positive electrode current collector, the same applied film containing a flame retardant as that of Example 21 was provide as a functional layer.

In Example 44, on the inner circumferential side of the positive electrode current collector, the same applied film containing aluminum oxide as that of Example 19, and on the outer circumferential side of the positive electrode current collector, the same applied film containing titanium oxide as that of Example 20 were provided, each as a functional layer.

In Example 45, on the inner circumferential side of the positive electrode current collector, the same applied film containing aluminum oxide as that of Example 19, and on the outer circumferential side of the positive electrode current collector, the same applied film containing a flame retardant as that of Example 21 were provided, each as a functional layer.

In Examples 2, 8, 14, 25 to 29, 31, 37, 42, and 43, with the separator interposed therebetween, the whole excess portion was wound around the outer surface of the first electrode on the inner layer side. In other Examples, without the separator interposed therebetween, the whole excess portion was wound around the outer surface of the first electrode on the inner layer side.

In Examples 4, 10, 16, 27, 33, and 39, the functional layer was provided on a half of the surface on the sealing body side, rather than on the entire surface of the current collector.

In Examples 5, 11, 17, 28, 34, and 40, the functional layer was provided on a half of the surface on the bottom side of the battery case, rather than on the entire surface of the current collector.

In Examples 6, 12, 18, 29, 35, and 41, the functional layer was not provided on the entire surface of the current collector, but in a stripe shape (width 10 mm, interval 3 mm) along the circumferential direction.

### <<Comparative Example 1>>

With the excess portion provided neither in the positive electrode nor the negative electrode, the negative electrode was disposed at the outermost layer, and the negative electrode active material layer was provided only on the inner circumferential side of the negative electrode of the outermost layer. Except for this, in the same manner as in Example 1, a lithium-ion secondary battery was obtained.

### [Evaluation]

### (1) Discharge capacity

In a 25 °C environment, a lithium-ion secondary battery in a discharged state was charged at a constant current equal to 0.5C (2-hour rate) until the battery voltage reached 4.2 V, and then charged at a constant voltage of 4.2 V until the current value reached 50 mA. This was followed by discharging at a constant current equal to 0.2C (5-hour rate) until the battery voltage reached 2.5 V, to determine a discharge capacity (DC). Note that the current at an X-hour rate means (1/X)C (A) = rated capacity (Ah) / X (h), where X represents the time taken for charging or discharging electricity equivalent to the rated capacity.

### (2) Safety against fire spread

The batteries were placed in a 500 °C oven, and 10 minutes after heating, the heating was stopped. Table 1 shows the percentage of the occurrence of cracking in the side wall of the battery case, regardless of whether the safety valve was activated or not. With respect to 100 batteries each for Examples and Comparative Examples, the safety against the fire spread was checked, and the ratio (R) of the number of batteries in which cracking had occurred in the side wall of the battery case was determined.

The evaluation results are shown in Table 1. The batteries of Examples 1 to 45 are denoted as batteries A1 to A45, and the batteries of Comparative Example 1 is denoted as a battery B1. In Table 1, the discharge capacity of the battery of each Example is a relative ratio, with the discharge capacity of the battery B1 taken as 100%.

**[Table 1]**

| battery | outermost layer current collector | inner circumferential side | outer circumferential side | L1 (layers) | functional layer | separator interposed | DC | R (%) |
|---|---|---|---|---|---|---|---|---|
| A1 | Cu foil | mixture | w/o | 1 | entire surface | w/o | 99 | 20 |
| A2 | Cu foil | mixture | w/o | 1 | entire surface | w | 99 | 30 |
| A3 | Cu foil | mixture | w/o | 4 | entire surface | w/o | 95 | 5 |
| A4 | Cu foil | mixture | w/o | 1 | sealing body side | w/o | 99 | 25 |
| A5 | Cu foil | mixture | w/o | 1 | bottom side | w/o | 99 | 50 |
| A6 | Cu foil | mixture | w/o | 1 | stripe | w/o | 99 | 30 |
| A7 | Cu foil | w/o | mixture | 1 | entire surface | w/o | 99 | 25 |
| A8 | Cu foil | w/o | mixture | 1 | entire surface | w | 99 | 35 |
| A9 | Cu foil | w/o | mixture | 4 | entire surface | w/o | 95 | 10 |
| A10 | Cu foil | w/o | mixture | 1 | sealing body side | w/o | 99 | 30 |
| A11 | Cu foil | w/o | mixture | 1 | bottom side | w/o | 99 | 55 |
| A12 | Cu foil | w/o | mixture | 1 | stripe | w/o | 99 | 35 |
| A13 | Cu foil | mixture | mixture | 1 | entire surface | w/o | 98 | 15 |
| A14 | Cu foil | mixture | mixture | 1 | entire surface | w | 98 | 25 |
| A15 | Cu foil | mixture | mixture | 4 | entire surface | w/o | 90 | 0 |
| A16 | Cu foil | mixture | mixture | 1 | sealing body side | w/o | 98 | 20 |
| A17 | Cu foil | mixture | mixture | 1 | bottom side | w/o | 98 | 45 |
| A18 | Cu foil | mixture | mixture | 1 | stripe | w/o | 98 | 25 |
| A19 | Cu foil | Al₂O₃ | w/o | 1 | entire surface | w/o | 99 | 10 |
| A20 | Cu foil | TiO₂ | w/o | 1 | entire surface | w/o | 99 | 10 |
| A21 | Cu foil | flame retardant | w/o | 1 | entire surface | w/o | 99 | 10 |
| A22 | Cu foil | mixture | Al₂O₃ | 1 | entire surface | w/o | 98 | 5 |
| A23 | Cu foil | mixture | TiO₂ | 1 | entire surface | w/o | 98 | 5 |
| A24 | Cu foil | mixture | flame retardant | 1 | entire surface | w/o | 98 | 5 |
| A25 | Al foil | Al₂O₃ | w/o | 1 | entire surface | w | 99 | 30 |
| A26 | Al foil | Al₂O₃ | w/o | 4 | entire surface | w | 95 | 5 |
| A27 | Al foil | Al₂O₃ | w/o | 1 | sealing body side | w | 99 | 25 |
| A28 | Al foil | Al₂O₃ | w/o | 1 | bottom side | w | 99 | 50 |
| A29 | Al foil | Al₂O₃ | w/o | 1 | stripe | w | 99 | 30 |
| A30 | Al foil | w/o | Al₂O₃ | 1 | entire surface | w/o | 99 | 25 |
| A31 | Al foil | w/o | Al₂O₃ | 1 | entire surface | w | 99 | 35 |
| A32 | Al foil | w/o | Al₂O₃ | 4 | entire surface | w/o | 95 | 10 |
| A33 | Al foil | w/o | Al₂O₃ | 1 | sealing body side | w/o | 99 | 30 |
| A34 | Al foil | w/o | Al₂O₃ | 1 | bottom side | w/o | 99 | 55 |
| A35 | Al foil | w/o | Al₂O₃ | 1 | stripe | w/o | 99 | 35 |
| A36 | Al foil | Al₂O₃ | Al₂O₃ | 1 | entire surface | w/o | 98 | 15 |
| A37 | Al foil | Al₂O₃ | Al₂O₃ | 1 | entire surface | w | 98 | 25 |
| A38 | Al foil | Al₂O₃ | Al₂O₃ | 4 | entire surface | w/o | 90 | 0 |
| A39 | Al foil | Al₂O₃ | Al₂O₃ | 1 | sealing body side | w/o | 98 | 20 |
| A40 | Al foil | Al₂O₃ | Al₂O₃ | 1 | bottom side | w/o | 98 | 45 |
| A41 | Al foil | Al₂O₃ | Al₂O₃ | 1 | stripe | w/o | 98 | 25 |
| A42 | Al foil | TiO₂ | w/o | 1 | entire surface | w | 99 | 10 |
| A43 | Al foil | flame retardant | w/o | 1 | entire surface | w | 99 | 10 |
| A44 | Al foil | Al₂O₃ | TiO₂ | 1 | entire surface | w/o | 98 | 5 |
| A45 | Al foil | Al₂O₃ | flame retardant | 1 | entire surface | w/o | 98 | 5 |
| B1 | Cu foil | w/o | w/o | w/o | w/o | w/o | 100 | 90 |

In the batteries of the Examples in which the L1 was equal to one layer of the length L of the outermost layer, as compared to the battery B1 of Comparative Example 1, the discharge capacity (DC) was reduced slightly (by 1 to 2%), but the ratio (R) of the number of batteries having cracking was remarkably decreased. In the batteries of the Examples in which the L1 was equal to about four layers of the L, the ratio (R) was further remarkably decreased. In the batteries having functional layers on both sides of the excess portion and without the separator interposed, a tendency was observed in which the ratio (R) was further smaller. Note that when the separator was interposed between the first electrode on the inner layer side and the excess portion, this is indicated as "w" in the column of the "separator interposed" in Table 1, and when not interposed, indicated as "w/o."

When the functional layer was provided on a half of the surface on the sealing body side, rather than on the entire surface of the current collector, a tendency was observed in which the ratio (R) was smaller than when provided on a half on the bottom side. This is presumably because the sealing body side, which is the side to be an outlet of the high temperature gas, is more liable to be hotter than the bottom side, and disposing the functional layer on the sealing body side is more effective.

When the functional layer was provided on a half of the surface on the sealing body side, rather than on the entire surface of the current collector, a tendency was observed in which the ratio (R) was smaller than when provided in a stripe shape along the circumferential direction. This is presumably because, when provided in a stripe shape, a portion not applied with the functional layer is present on the current collector on the sealing body side, which is the side to be an outlet of the high temperature gas. On the other hand, when the functional layer is provided in a stripe shape, a tendency was observed in which the ratio (R) was smaller than when provided on the bottom side. This proves the effectiveness of providing the functional layer on the sealing body side on the current collector.

### [Industrial Applicability]

A nonaqueous electrolyte secondary battery according to the present disclosure is useful as a main power source for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 10: nonaqueous electrolyte secondary battery
- 11: sealing body
- 12: valve body
- 13: metal plate
- 14: insulating member
- 15: positive electrode
- 15L: positive electrode lead
- 15b: positive electrode current collector
- 15c: positive electrode active material layer
- 16: negative electrode
- 16L: negative electrode lead
- 16b: negative electrode current collector
- 16c: negative electrode active material layer
- 16d: functional layer
- 16D: excess portion
- 17: separator
- 18: electrode group
- 21: gasket
- 22: battery case
- 22a: groove

## Claims

1. A nonaqueous electrolyte secondary battery, comprising:
an electrode group including a first electrode having a first current collector, a second electrode having a second current collector, and a separator interposed between the first electrode and the second electrode; a nonaqueous electrolyte; and a battery case housing the electrode group and the nonaqueous electrolyte, wherein
the first electrode and the second electrode are wound with the separator interposed therebetween, with an outermost layer of the first electrode disposed further outside than an outermost layer of the second electrode,
a winding-finish end of the first electrode is an end of an excess portion which is wound around an outer surface of the first electrode on an inner layer side, without the second electrode interposed therebetween,
a circumferential length L1 of the excess portion is 90% or more of a circumferential length L of the first electrode of the outermost layer, and
the excess portion has a functional layer disposed on a surface of the first current collector.

2. The nonaqueous electrolyte secondary battery according to claim 1, wherein at least a part of the excess portion is wound around the outer surface of the first electrode on the inner layer side, without neither the second electrode nor the separator interposed therebetween.

3. The nonaqueous electrolyte secondary battery according to claim 1, wherein the excess portion is wound around the outer surface of the first electrode on the inner layer side, with the separator interposed therebetween.

4. The nonaqueous electrolyte secondary battery according to claim 1, wherein
the first electrode includes a first active material layer disposed on a surface of the first current collector, and
a thickness of the functional layer is equal to or less than a thickness of the first active material layer.

5. The nonaqueous electrolyte secondary battery according to claim 4, wherein the functional layer is a part of the first active material layer, and the thickness of the functional layer is equal to or less than a thickness of a remainder of the first active material layer.

6. The nonaqueous electrolyte secondary battery according to claim 1, wherein the functional layer is disposed continuously on one or both sides of the first current collector.

7. The nonaqueous electrolyte secondary battery according to claim 1, wherein the functional layer is disposed intermittently on one or both sides of the first current collector.

8. The nonaqueous electrolyte secondary battery according to claim 1, wherein the functional layer contains at least one of an organic particle and an inorganic particle.

9. The nonaqueous electrolyte secondary battery according to claim 8, wherein the inorganic particle includes at least one selected from the group consisting of a metal oxide, a metal hydroxide, a metal nitride, a metal fluoride, a metal boride, and a metal carbide.

10. The nonaqueous electrolyte secondary battery according to claim 9, wherein
the metal oxide includes at least one selected from the group consisting of aluminum oxide, titanium oxide, magnesium oxide, zirconium oxide, nickel oxide, silicon oxide, and manganese oxide,
the metal hydroxide includes at least one selected from the group consisting of boehmite, aluminum hydroxide, and magnesium hydroxide,
the metal nitride includes at least one selected from the group consisting of titanium nitride, boron nitride, aluminum nitride, magnesium nitride, and silicon nitride,
the metal fluoride includes at least one selected from the group consisting of aluminum fluoride, lithium fluoride, sodium fluoride, magnesium fluoride, calcium fluoride, and barium fluoride,
the metal boride includes titanium boride, and
the metal carbide includes at least one selected from the group consisting of silicon carbide, boron carbide, titanium carbide, and tungsten carbide.

11. The nonaqueous electrolyte secondary battery according to claim 8, wherein the organic particle includes a flame retardant containing a halogen atom.

12. The nonaqueous electrolyte secondary battery according to claim 11, wherein the flame retardant includes at least one selected from the group consisting of ethylene-1,2-bispentabromophenyl, ethylenebistetrabromophthalimide, tetrabisbromobisphenol A, hexabromocyclododecane, 2,4,6-tribromophenol, 1,6,7,8,9,14,15,16,17,17,18,18-dodecachloropentacyclo(12.2.1.16,9.02,13.05,10)octadeca-7,15-diene, and tris(2,2,2-trifluoroethyl)phosphate.

13. The nonaqueous electrolyte secondary battery according to claim 1, wherein
the first electrode is a negative electrode, and
the first current collector contains Cu.

14. The nonaqueous electrolyte secondary battery according to claim 1, wherein
the first electrode is a positive electrode, and
the first current collector includes at least one selected from the group consisting of Al, Ti, and stainless steel.
